# EUROPEAN PATENT SPECIFICATION

(11) **EP 0 450 919 B1**
(45) Date of publication and mention of the grant of the patent: **05.03.1997**
(21) Application number: 91302891.6
(22) Date of filing: 02.04.1991
(51) Int. Cl.: H01L 41/09, B41J 23/00

(54) **Vibration wave driven motor**
Vibrationswellenbetriebener Motor
Moteur actionné par ondes vibratoires

(30) Priority: 02.04.1990 JP 88083/90
(43) Date of publication of application: 09.10.1991
(73) Proprietor: CANON KABUSHIKI KAISHA, Tokyo 146 (JP)
(72) Inventor: Maeno, Takashi, c/o Canon Kabushiki Kaisha, Ohta-ku, Tokyo (JP); Seki, Hiroyuki, c/o Canon Kabushiki Kaisha, Ohta-ku, Tokyo (JP); Kimura, Atsushi, c/o Canon Kabushiki Kaisha, Ohta-ku, Tokyo (JP)
(74) Representative: Beresford, Keith Denis Lewis

(56) References cited:
- EP-A- 0 169 297
- GB-A- 2 174 554

## Description

This invention relates to a vibration wave driven motor wherein an elastic body in which travelling vibration waves are generated is constituted as a running track type with an elliptic shape consisting of straight portions and arcuate portions.

In this vibration wave driven motor that is driven by travelling vibration waves, a pair of standing waves are excited that have a positional phase difference of an odd multiple of λ/4, the same frequency, and a phase difference of ±π/2 in time. The two waves thus excited are superimposed a synthesized, thereby producing travelling vibration waves in the elastic body.

Accordingly, in order to constitute a vibration wave driven motor using travelling vibration waves, a pair of starting wave vibration modes are required that have a phase difference of an odd multiple of λ/4 as well as an equality, exact or approximate, in the natural frequencies of the vibration members associated with these two modes.

Elastic bodies of a ring shape (a true circle form) such as constituted in the embodiments of prior art have a rotationally symmetric form, and a uniform cross-sectional shape, whereby both the flexural rigidity and the torsional rigidity become equal at any point in these elastic bodies. As a result, the natural frequencies of the vibration members associated the two modes mentioned above are always equal.

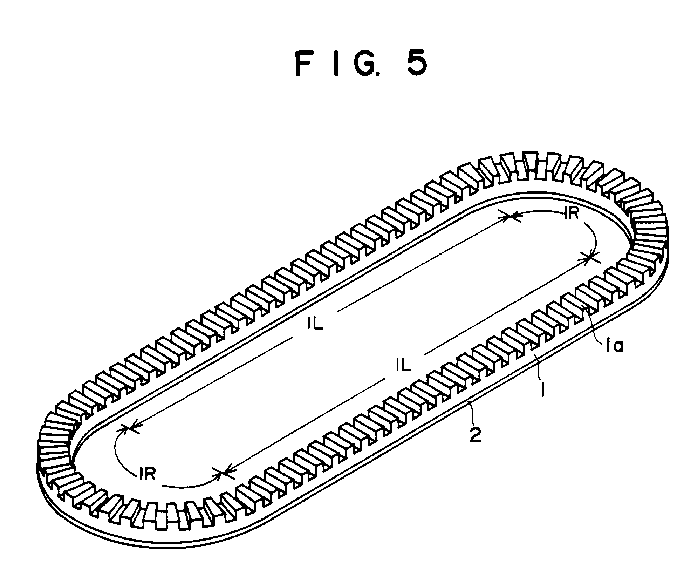

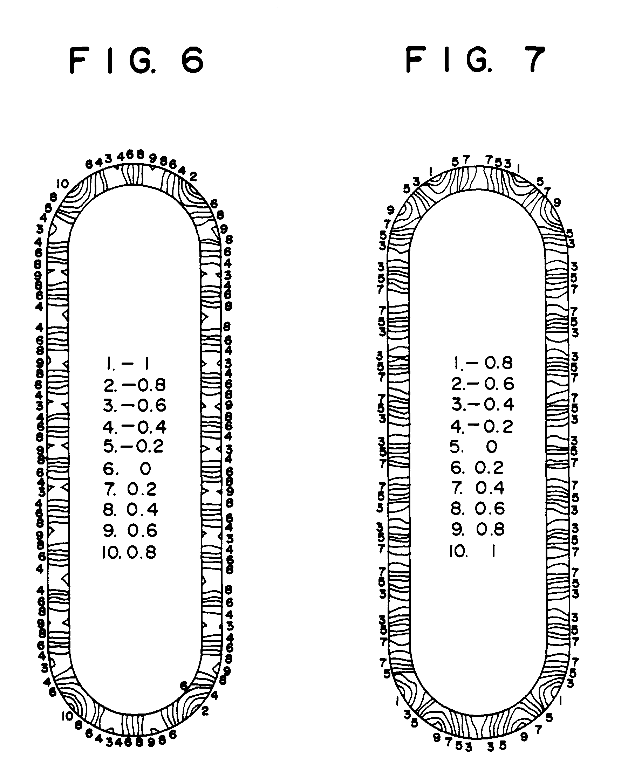

Figure 5 is a perspective view illustrating a vibration member wherein a piezo electric element 2 including an array of driving piezo electric elements for exciting the pair of standing waves having the phase relationship mentioned above is glued and secured on the back of the elastic body 1 of an elliptical running track shape which consists of straight portions 1L and arcuate portions 1R. Figures 6 and 7 are the views illustrating the states of standing waves produced on the elastic body 1. Both Figures 6 and 7 use contour lines to show how the displacements occur in a direction vertical to the elastic body plane. The solid lines indicate the displacement [0], which forms a node of vibration (a nodal line). Each line number corresponds to its altitude: [10] denotes a maximum in the positive direction displacement (peak) while [1] denotes a minimum in the negative displacement (bottom).

In case of this example, because of a high order travelling vibration mode as well as a large diameter arcuate portion lR, the degree of variance of both the flexural rigidity and the torsional rigidity at straight portions 1L and the arcuate portions 1R of the elastic body 1 becomes small, whereby a pair of vibration modes are realised similar to the case of a ring type elastic body wherein the wavelength and amplitude of both the straight and arcuate portions can be considered approximately equal.

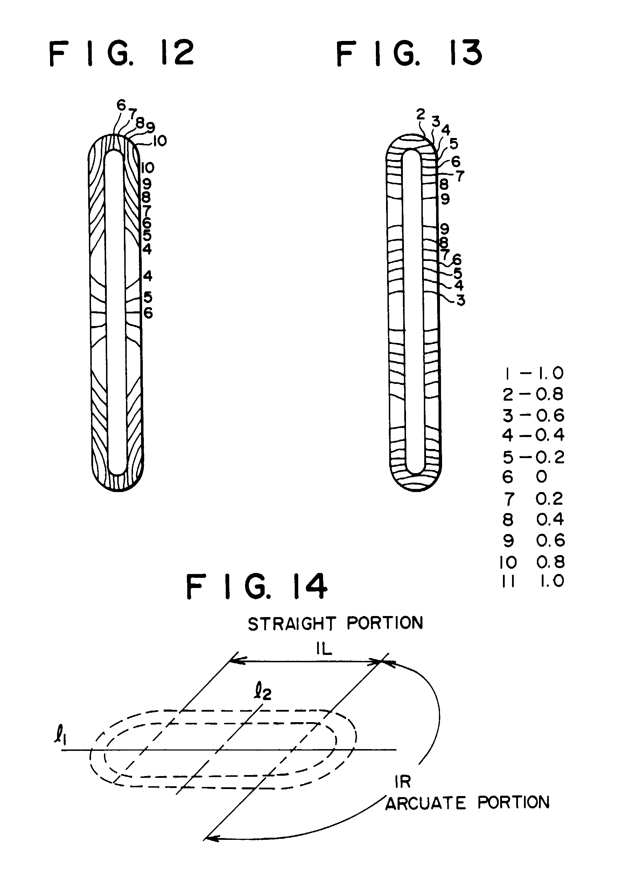

In an experiment where the vibration member of a running track type having both a large radius in the arcuate portion lR of an elastic body and a large wave number for the travelling vibration waves being generated was used, it was found that even if the length in both the straight portions lL and the arcuate portions lR are selected arbitrarily, a pair of vibrating waves with the phase shift of λ/4 and the equal natural frequencies can be generated. The ranges of the straight and arcuate portions are specified in Figure 14.

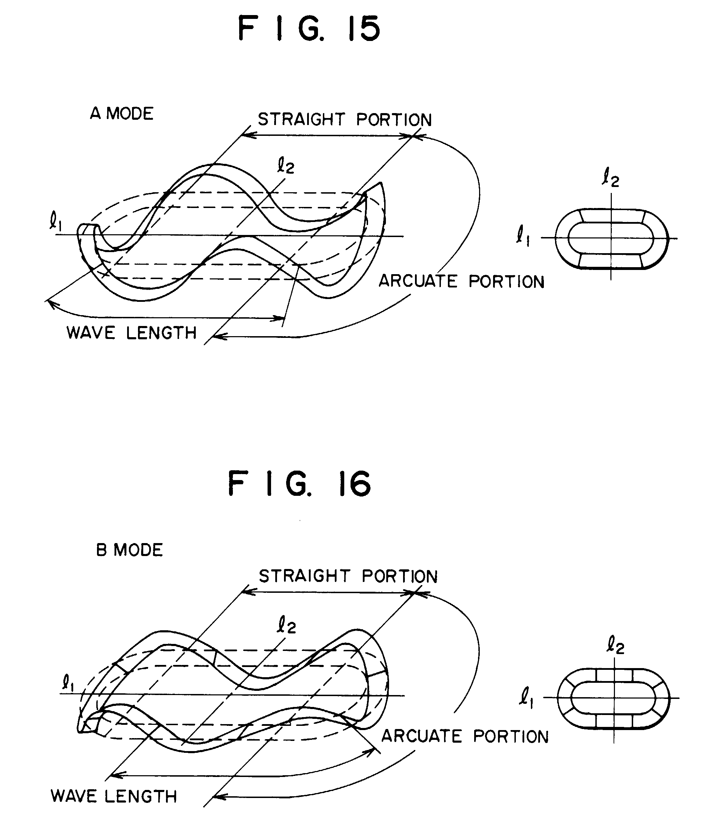

A vibration member of a running track form, when excited, exhibits a pair of standing wave vibrating modes that are symmetrical about the l₁ axis and l₂ axis as shown in Figs. 15 and 16. Figure 15 shows the standing wave vibration mode that is produced by one array of the piezo electric elements. (This mode is called "A vibration mode" hereafter.) Figure 16 shows another standing wave vibration mode that is produced by the other array of the piezo electric elements. (This mode is called "B vibration mode" hereafter.) The fourth order vibration wave are shown in Figure 15 and Figure 16.

As the radius of the arcuate portion becomes smaller, the differences in the flexural rigidity, the torsional rigidity and the inertial mass become greater between the straight and arcuate portions. This results from the fact that inside length is equal to the outside at the straight portions, while the length of the inner circumference is not equal to that of the outer circumference for the arcuate portion.

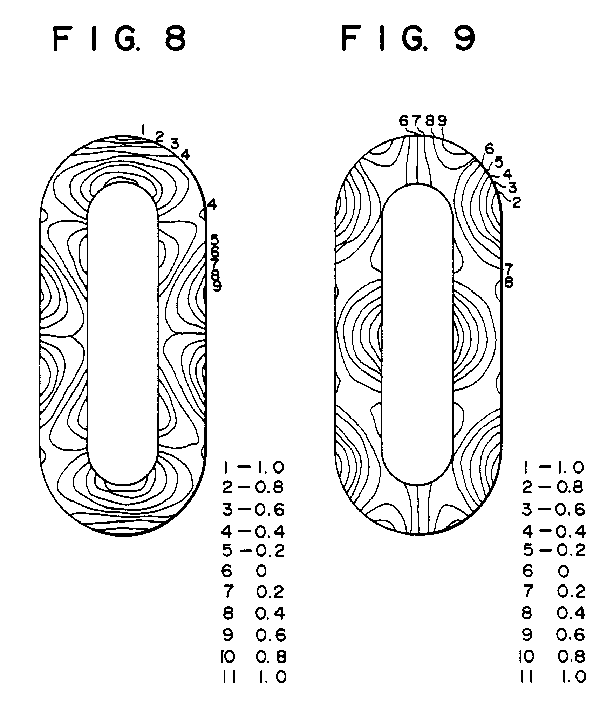

Furthermore, since the positions of the antinodes and nodes for the A vibration mode are different to those of the antinodes and nodes for the B mode, the degree of contribution made to each mode by the rigidity of both the straight portion and the arcuate portion of the elastic body is subject to variations, whereby a pair of vibration modes are produced that have different wavelengths, amplitudes and torsional amounts. In this case, the natural frequencies of these two modes generally do not match. Especially when the vibration is low order, the wavelength becomes relatively long and one wave in the wavelength of vibrating waves spreads wide over both the straight and arcuate portions, thus causing the natural frequencies of each vibration mode to become further apart. In the case of the example shown in Figures 8 and 9, the radius is 3mm and the outside diameter is 7mm for the arcuate portion. The length is 20mm and the width is 4mm for the straight portion. The thickness is 2mm for the vibrator made of stainless steel (SUS). The natural frequencies in this case are 153 kHz in Figure 8, and 136 kHz in Figure 9.

As suggested by the case described above, it was difficult to derive an equality between the natural frequencies of the A and B vibration modes using a vibrator of running track type having both a small radius in the arcuate portions and a low order vibration.

One aspect of this invention is to provide a vibration wave driven motor of an elliptical form wherein the generation of travelling vibration waves can be assured even in a small radius at the arcuate portions.

Another aspect of this invention is to provide a vibration wave driven motor of an elliptical form that allows low order travelling vibration waves to be set at discretion.

According to the invention there is provided a vibration wave driven motor having features as recited in claim 1.

As an embodiment of this present invention, the natural frequency is assumed as "f"; 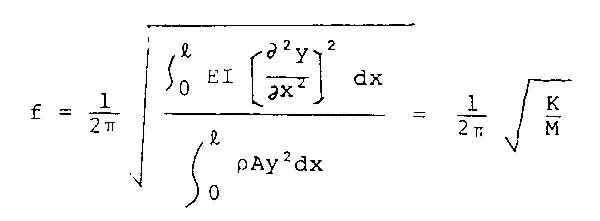
- E:: modulus of longitudinal elasticity
- I:: moment of inertia of area
- ρ:: density
- A:: cross section area
- x:: a position in the direction of length
- y:: displacement in the direction of out of plane vibration
- M:: generalized mass (equivalent mass in the system with one degree of freedom)
- K:: generalized stiffness (equivalent rigidity in the system with one degree of freedom)
In the conditions established as described above, the M and the K were matched.

Thus the values of the ratio defined below in the A and B vibration modes are made equal.$\frac{\text{strain energy sum (the above-mentioned K)}}{\text{sum of vibration amplitude squared (the above-mentioned M)}}$

More practically, the contributions to the ratios of the strain energy and the kinetic energy are made equal in either the straight portion and arcuate portion of the elastic member of the elliptical shape.

A feature of another embodiment of this invention is that the shape was arranged so as to cause the two values of the ratio K/M to match, the ratio K/M being proportional to the value obtained by dividing the strain energy sum by the sum of vibration amplitude squared.

Still other aspects of this invention will become apparent in the course of the detailed explanations to be given hereinbelow and in the independent claims.

### BRIEF DESCRIPTION OF THE DRAWINGS

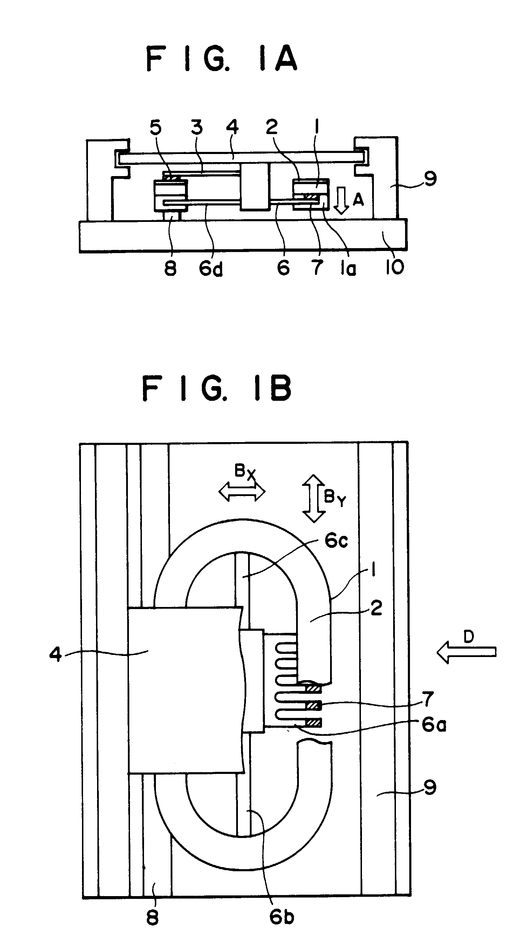

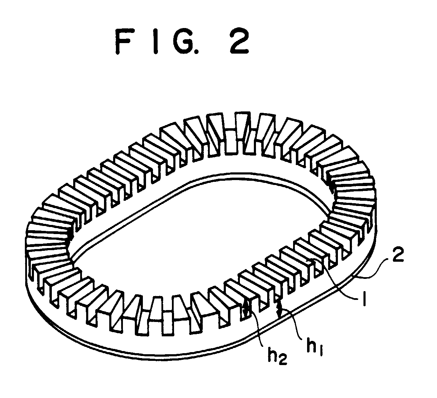

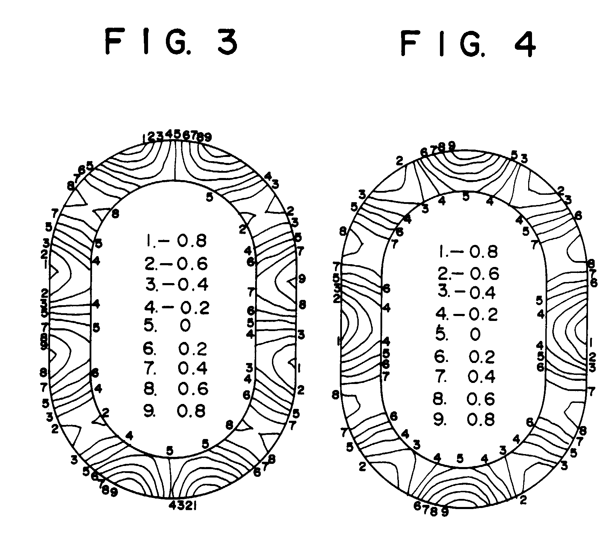

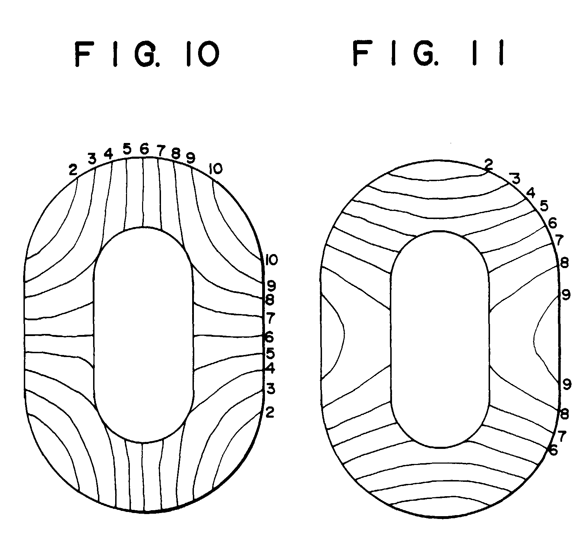

Figures 1A through 4 show the first embodiment of a vibration wave driven motor of this invention. Figure 1A is a cross sectional view, and 1B is a top view. Figure 2 is a perspective view of the elastic body which is shown in Figures 1A and 1B. Figures 3 and 4 are drawings illustrating the displacement of the elastic body which is shown in Figures 1A and 1B. Figure 5 is a perspective view of the elastic body which has a large radius in the arcuate portions. Figures 6 and 7 are drawings illustrating the displacement of the elastic body which is shown in Figure 5. Figures 8 and 9 are drawings illustrating the displacement of the elastic body of the conventional vibration wave driven motor. Figures 10 and 11 are drawings illustrating the displacement of the elastic body in the second embodiment. Figures 12 and 13 are drawings showing the displacement of the elastic body in the third embodiment. Figure 14 is a drawing showing straight portions and arcuate portions of the elastic body. Figures 15 and 16 are conceptual drawings illustrating the vibration states of the elastic body in the vibration modes of four waves.

### DESCRIPTION OF THE PREFERRED EMBODIMENT

### Embodiment 1.

Figures 1A through 4 show one embodiment wherein a vibration wave driven motor of this invention is used as a driving source in a printer of bubble jet type.

Such a printer using a bubble jet method as mentioned above is outlined in U.S. Patent 4,723,129 and 4,740,796 and is described briefly as follows:

At least one driving signal, capable of producing a sharp temperature increase in excess of the temperature for nucleated boiling and also matching one piece of recording information is impressed on each electro-thermal transducer placed pairing with a sheet and a liquid path wherein liquid (ink) is stored. This signal creates thermal energy over the electro-thermal transducer and produces thin film boiling on the heat acting surface of a recording head, thereby producing one bubble to one driving signal inside the liquid (ink). The growth and shrinkage of this air bubble emits the liquid (ink) from a discharge opening, whereby at least one droplet is created. Said droplet sprayed over a sheet of paper creates a character. The printer employing this method is generally called a bubble jet printer.

Figs. 1A and 1B are examples where a linear vibration wave driven motor is used as a vibration wave driven motor. The elastic body 1 of an elliptic shape shown in Figure 2 is used as a movable member.

In Figs. 1A and 1B, 10 is a base plate that is secured to the printer's member (which is not shown in the Figure). 9 are guide members that are set on both sides of said base plate 10 and have guide grooves of U shape. 8 is a stator fixed to said base plate 10 to form a rail. 4 is a movable member that is supported movably between both said guide members 9, and fixed to an elastic body 1 via a supporting plate 6 (which will be explained later) such that it can be moved by said elastic body 7. On said movable member 4, a head is established at the right end of said same member 4 in order to print characters on a cut sheet (which is not shown in the Figure). Said cut sheet, by the way, is transported by means of different driving source through the opening between the abovementioned printer member and said base plate 10 in the direction perpendicular to the moving direction of said elastic body 1. 6 is an elastic supporting plate that is coupled to said elastic body 1 by means of slit portions 6a, 6d and engaging portions 6c, 6b in such a manner that the movement of the elastic body 1 (an elastic supporting plate) is restricted in both Bx and By directions. The elastic body 1 is pressed to said stator 8 with the predetermined force of press contact that is generated by the elastic force of the elastic supporting plate 6 in the direction A indicated by the arrow.

When an array of driving elements of the piezo electric elements 2 secured to said elastic body 1 is applied with the AC voltage having a predetermined phase difference, standing waves as illustrated in Figures 3 and 4 are produced on said elastic body. As those waves are synthesized, travelling vibration waves are generated thus the elastic member is moved straight along the stator 8 while maintaining a frictional contact with said stator 8.

The natural frequencies f of the elastic body l in the A and B modes in Figures 3 and 4 were f = 70.47 and 70.48 kHz, which are almost identical as shown in the chart below.

The sizes of the elastic body 1 (cf. Figure 2) comprising the vibrating body are : the length of the straight portion 10.9mm, the inner diameter of the arcuate portion 8.5mm, the outside diameter 12.5mm, the width 4mm, and the thickness h₁ = 2.5mm for the base part and h₂ = 1.5mm for the tooth part.

**Table**

| | A vibration mode | B vibration mode |
|---|---|---|
| M(kg) | 2.289 x 10⁻³ | 2.121 x 10⁻³ |
| K(N/m) | 4.488 x 10¹¹ | 4.159 x 10⁸ |
| $\frac{\text{K}}{\text{M}} \text{(1/s)}$ | 1.961 x 10¹¹ | 1.961 x 10¹¹ |
| f(kHz) | 70.47 | 70.48 |

The elastic body 1 of the present embodiment having characteristic described above produces standing waves of six order with small distortion in the straight portion, which is a driving portion. Also the natural frequencies of the vibrating bodies associated with the two vibration modes with a positional phase shift of 1/4 wavelength become approximately equal.

Accordingly, whenever the piezo electric elements 2 as the electrical-mechanical converting member are excited, the generation of the travelling vibration waves in the vibrating bodies 1 and 2 can be assured.

### Embodiment 2

Figures 10 and 11 show a second embodiment.

The natural frequencies f_{A}, f_{B} in the two A and B vibration modes of this embodiment are obtained as follows based on the equation previously explained:${\text{f}}_{\text{A}} \text{=} \frac{\text{1}}{\text{2π}} \sqrt{\frac{\text{K}}{\text{M}}} \text{= 23.44 kHz}$${\text{f}}_{\text{B}} \text{=} \frac{\text{1}}{\text{2π}} \sqrt{\frac{\text{K}}{\text{M}}} \text{= 23.42 kHz}$

The sizes of the elastic member are the same as the case in Figures 8 and 9 except that the length of the elastic body in the straight portion is 7mm. The wave number in the arcuate portion is small, namely 0.6.

Though different shape of vibration modes are observed in the present embodiment as shown in Figures 10 and 11, the natural frequencies of the vibration members for the vibration modes are substantially the same, thus generating travelling vibration waves over the vibration members.

### Embodiment 3.

Figures 12 and 13 show the third embodiment.

The natural frequencies f_{A}, f_{B} in the A and B vibration modes of this embodiment are obtained as follows based on the equation previously explained:${\text{f}}_{\text{A}} \text{=} \frac{\text{1}}{\text{2π}} \sqrt{\frac{\text{K}}{\text{M}}} \text{= 5.67 kHz}$${\text{f}}_{\text{B}} \text{=} \frac{\text{1}}{\text{2π}} \sqrt{\frac{\text{K}}{\text{M}}} \text{= 5.69 kHz}$

The sizes of the elastic body are the same as in the case of Figures 8 and 9 except that the length of the elastic body in the straight portion is 87mm. The wave number in the arcuate portion is small, namely 0.4.

With the vibration wave driven motor of this invention, as hitherto described in detail, of the elastic body consisting of straight portions and arcuate portions, the following effects can be realized because the virtual matching is achieved of the ratios K/M associated with the A and B modes and as a result of this, the natural frequencies of the vibration modes are also virtually equal.
1. Arbitrary order of travelling vibration waves can be selected in a vibration wave driven motor.
2. The length of the straight portion of a vibration member can be defined if the radius of the arcuate portion of a vibration member is determined. Conversely, the radius of the arcuate portion can be defined if the length of the straight portion is determined.
3. It becomes feasible to make a vibration wave driven motor that has a vibration order less than third mode, thus offering a chance to make a compact motor with reduction of an extra space (the arcuate portions, etc.) except the driving portion (one of the straight portions).

In the embodiments hitherto described, it is assumed that the vibration members 1 and 2 move over the stator 8. This invention, however, is also applicable to an apparatus where the vibrating members 1 and 2 are fixedly arranged at a predetermined position and a transporting member such as a sheet is placed over said vibrating members so that said transporting means can be transferred by the travelling vibration waves.

## Claims

1. A vibration wave driven motor comprising:
a vibration member of a loop shape consisting of straight portions and arcuate portions that are extended from said straight portions, said vibration member generating a travelling vibration wave circulating in the vibration member in response to at least first and second standing waves which are produced when an electrical signal is applied thereto, wherein the ratio between strain energy sum and the sum of the vibration amplitude squared in said vibration member associated with said first standing wave is equal to the ratio between strain energy sum and the sum of the vibration amplitude squared in said vibration member associated with the second standing wave.

2. A vibration wave driven motor according to Claim 1, wherein said vibration member consists of a pair of straight portions, a pair of arcuate portions extending from respective ends of said pair of straight portions, a predetermined width, and a predetermined thickness.

3. A vibration wave driven motor according to Claim 1 or 2, wherein the ratio between the lengths of the straight and arcuate portions is adjusted in such a manner that the said sum ratios become substantially equal.

4. A vibration wave driven motor according to Claim 2, wherein the length of each straight portion is 10.9mm, the radius of each arcuate portions is 8.5mm, the outside diameter is 12.5mm, the width is 4mm, and the thickness is 4mm.

5. A vibration wave driven motor according to Claim 1, 2, 3 or 4, wherein said vibration member has a contact surface that contacts said contact member.

6. A vibration wave driven motor according to Claim 5, wherein the contact surface of said vibration member has a plurality of grooves.

7. A vibration wave driven motor according to Claim 6, wherein the depth of said grooves is 1.5mm.

8. A vibration wave driven motor comprising:
(a) a vibration member of a loop shape that has a pair of straight portions, each of which has a predetermined length, and a pair of arcuate portions having a predetermined length and extending from respective ends of said straight portions; and
(b) a pair of electro-mechanical energy converting elements contacting said vibration member for generating first and second standing waves in said vibration member in response to an applied electrical signal, the lengths of the straight and arcuate portions of said vibration member being adjusted such that the ratio between the strain energy sum and the sum of the vibrating amplitude squared in said vibration member associated with said first standing wave is equal to the ratio between the strain energy sum and the sum of the vibration amplitude squared in said vibration member associated with the second standing wave.

9. A vibration wave driven motor according to Claim 8, wherein the length of each straight portion is 10.9mm, the radius of each arcuate portion is 8.5mm, the outside diameter is 12.5mm, the width is 4mm, and the thickness is 4mm for said vibration member.

10. A vibration wave driven motor according to Claim 8 or 9, wherein said vibration member has a contact surface that contacts said contact member.

11. A vibration wave driven motor according to Claim 10, wherein the contact surface of said vibration member has a plurality of grooves.

12. A vibration wave driven motor according to Claim 11, wherein the depth of said groove is 1.5mm.

13. A vibration wave driven motor comprising:
(a) a vibration member of a loop shape that has a pair of straight portions, each of which has a predetermined length, and a pair of arcuate portions having a predetermined length and extending from said straight portions; and
(b) a pair of electro-mechanical energy converting elements provided on said vibration member with a positional phase difference and for generating first and second standing waves in said vibration member in response to an applied electrical signal having an electrical phase difference therebetween, the lengths of the straight and arcuate portions of said vibration member being adjusted such that the ratio between the strain energy sum and the sum of the vibration amplitude squared in said vibration member associated with said first standing wave are equal to the ratio between the strain energy sum and the sum of the vibration amplitude squared in said vibration member associated with said second standing wave.

14. A vibration wave driven printer comprising:
(a) a contact member;
(b) a movable body of an elliptical shape that movably contacts said contact member;
(c) a printing head engaged with said movable body; and
(d) a pair of electro mechanical energy converting elements contacting said movable member for generating first and second standing waves in said movable member in response to an applied electrical signal, the lengths of the straight and arcuate portions of said movable member being adjusted such that the ratio between the strain energy sum and the sum of the vibration amplitude squared in said movable member associated with said first standing wave being arranged equal to the ratio between the strain energy sum and the sum of the vibration amplitude squared in said movable member associated with said second standing wave.

15. A vibration wave driven printer according to Claim 14, wherein said printer is a bubble jet type printer.

16. A vibration device for a vibration wave driven motor comprising:
(a) a vibration member contacting a contact member and consisting of a pair of straight portions, each of which has a predetermined length, and a pair of arcuate portions having a predetermined length and extending from said straight portions;
(b) a pair of electro-mechanical energy converting elements contacting said vibration member for generating first and second standing waves in said vibration member in response to an applied electrical signal, the lengths of the straight and the arcuate portions of said vibrating member being adjusted such that the ratio between the strain energy sum and the sum of vibration amplitude squared associated with said first standing wave is equal to the ratio between the strain energy sum and the sum of the vibrating amplitude squared in said vibration member associated with said second standing wave.

17. Use of a vibration wave motor in accordance with any of claims 1 to 13, wherein the vibration members of the motor are fixedly arranged at a predetermined position to transport a transporting member such as a sheet placed over the vibration member.

## Patentansprüche

1. Vibrationswellenbetriebener Motor mit
einem schleifenförmigen Vibrationsteil, das aus geraden Abschnitten und aus den geraden Abschnitten heraus verlaufenden gebogenen Abschnitten besteht, wobei das Vibrationsteil im Ansprechen auf zumindest erste und zweite stehende Wellen, die bei Anlegen eines elektrischen Signals daran erzeugt werden, eine in dem Vibrationsteil umlaufende wandernde Vibrationswelle erzeugt, wobei das der ersten stehenden Welle zugeordnete Verhältnis zwischen der Verformungsarbeitssumme und der Summe der quadrierten Vibrationsamplitude in dem Vibrationsteil gleich dem der zweiten stehenden Welle zugeordneten Verhältnis zwischen der Verformungsarbeitssumme und der Summe der quadrierten Vibrationsamplitude in dem Vibrationsteil ist.

2. Vibrationswellenbetriebener Motor nach Anspruch 1, wobei das Vibrationsteil aus einem Paar gerader Abschnitte, einem Paar aus jeweiligen Enden des Paares gerader Abschnitte heraus verlaufender gebogener Abschnitte, mit einer vorbestimmten Breite und mit einer vorbestimmten Dicke besteht.

3. Vibrationswellenbetriebener Motor nach Anspruch 1 oder 2, wobei das Verhältnis zwischen den Längen der geraden und gebogenen Abschnitte derart eingestellt ist, daß die Summenverhältnisse im wesentlichen gleich sind.

4. Vibrationswellenbetriebener Motor nach Anspruch 2, wobei die Länge jedes geraden Abschnitts 10,9 mm, der Radius jedes gebogenen Abschnitts 8,5 mm, der Außendurchmesser 12,5 mm, die Breite 4 mm und die Dicke 4 mm betragen.

5. Vibrationswellenbetriebener Motor nach Anspruch 1, 2, 3 oder 4, wobei das Vibrationsteil eine ein Kontaktteil berührende Kontaktoberfläche aufweist.

6. Vibrationswellenbetriebener Motor nach Anspruch 5, wobei die Kontaktoberfläche des Vibrationsteils eine Vielzahl von Nuten aufweist.

7. Vibrationswellenbetriebener Motor nach Anspruch 6, wobei die Tiefe der Nuten 1,5 mm beträgt.

8. Vibrationswellenbetriebener Motor mit
(a) einem schleifenförmigen Vibrationsteil mit einem Paar jeweils eine vorbestimmte Länge aufweisender gerader Abschnitte und einem Paar eine vorbestimmte Länge aufweisender und aus jeweiligen Enden der geraden Abschnitte heraus verlaufender gebogener Abschnitte, und
(b) einem Paar das Vibrationsteil berührender elektromechanischer Energie-Wandlerelemente zur Erzeugung von ersten und zweiten stehenden Wellen in dem Vibrationsteil im Ansprechen auf ein angelegtes elektrisches Signal, wobei die Längen der geraden und gebogenen Abschnitte des Vibrationsteils derart eingestellt sind, daß das der ersten stehenden Welle zugeordnete Verhältnis zwischen der Verformungsarbeitssumme und der Summe der quadrierten Vibrationsamplitude in dem Vibrationsteil gleich dem der zweiten stehenden Welle zugeordneten Verhältnis zwischen der Verformungsarbeitssumme und der Summe der quadrierten Vibrationsamplitude in dem Vibrationsteil ist.

9. Vibrationswellenbetriebener Motor nach Anspruch 8, wobei für das Vibrationsteil die Länge jedes geraden Abschnitts 10,9 mm, der Radius jedes gebogenen Abschnitts 8,5 mm, der Außendurchmesser 12,5 mm, die Breite 4 mm und die Dicke 4 mm betragen.

10. Vibrationswellenbetriebener Motor nach Anspruch 8 oder 9, wobei das Vibrationsteil eine ein Kontaktteil berührende Kontaktoberfläche aufweist.

11. Vibrationswellenbetriebener Motor nach Anspruch 10, wobei die Kontaktoberfläche des Vibrationsteils eine Vielzahl von Nuten aufweist.

12. Vibrationswellenbetriebener Motor nach Anspruch 11, wobei die Tiefe der Nuten 1,5 mm beträgt.

13. Vibrationswellenbetriebener Motor mit
(a) einem schleifenförmigen Vibrationsteil mit einem Paar jeweils eine vorbestimmte Länge aufweisender gerader Abschnitte und einem Paar eine vorbestimmte Länge aufweisender und aus den geraden Abschnitten heraus verlaufender gebogener Abschnitte, und
(b) einem auf dem Vibrationsteil mit einer Positions-Phasendifferenz vorgesehenen Paar elektromechanischer Energie-Wandlerelemente zur Erzeugung von ersten und zweiten stehenden Wellen in dem Vibrationsteil im Ansprechen auf ein angelegtes elektrisches Signal mit einer elektrischen Phasendifferenz dazwischen, wobei die Längen der geraden und gebogenen Abschnitte des Vibrationsteils derart eingestellt sind, daß das der ersten stehenden Welle zugeordnete Verhältnis zwischen der Verformungsarbeitssumme und der Summe der quadrierten Vibrationsamplitude in dem Vibrationsteil gleich dem der zweiten stehenden Welle zugeordneten Verhältnis zwischen der Verformungsarbeitssumme und der Summe der quadrierten Vibrationsamplitude in dem Vibrationsteil ist.

14. Vibrationswellenbetriebene Druckeinrichtung mit
(a) einem Kontaktteil,
(b) einem bewegbaren, elliptischen Körper, der das Kontaktteil bewegbar berührt,
(c) einem mit dem bewegbaren Körper im Eingriff stehenden Druckkopf,
(d) einem Paar den bewegbaren Körper berührender elektromechanischer Energie-Wandlerelemente zur Erzeugung erster und zweiter stehender Wellen in dem bewegbaren Körper im Ansprechen auf ein angelegtes elektrisches Signal, wobei die Längen der geraden und der gebogenen Abschnitte des bewegbaren Körpers derart eingestellt sind, daß das der ersten stehenden Welle zugeordnete Verhältnis zwischen der Verformungsarbeitssumme und der Summe der quadrierten Vibrationsamplitude in dem bewegbaren Körper gleich dem der zweiten stehenden Welle zugeordneten Verhältnis zwischen der Verformungsarbeitssumme und der Summe der quadrierten Vibrationsamplitude in dem bewegbaren Körper eingerichtet ist.

15. Vibrationswellenbetriebene Druckeinrichtung nach Anspruch 14, wobei es sich bei der Druckeinrichtung um eine Bläschenstrahl-Druckeinrichtung handelt.

16. Vibrationseinrichtung für einen vibrationswellenbetriebenen Motor mit
(a) einem Vibrationsteil, das ein Kontaktteil berührt und aus einem Paar jeweils eine vorbestimmte Länge aufweisender gerader Abschnitte und einem Paar eine vorbestimmte Länge aufweisender und aus den geraden Abschnitten heraus verlaufender gebogener Abschnitte besteht, und
(b) einem Paar das Vibrationsteil berührender elektromechanischer Energie-Wandlerelemente zur Erzeugung erster und zweiter stehender Wellen in dem Vibrationsteil im Ansprechen auf ein angelegtes elektrisches Signal, wobei die Längen der geraden und der gebogenen Abschnitte des Vibrationsteils derart eingestellt sind, daß das der ersten stehenden Welle zugeordnete Verhältnis zwischen der Verformungsarbeitssumme und der Summe der quadrierten Vibrationsamplitude gleich dem der zweiten stehenden Welle zugeordneten Verhältnis zwischen der Verformungsarbeitssumme und der Summe der quadrierten Vibrationsamplitude in dem Vibrationsteil ist.

17. Verwendung eines vibrationswellenbetriebenen Motors nach einem der Ansprüche 1 bis 13, wobei die Vibrationsteile des Motors fest an einer vorbestimmten Position zum Transport eines Transportabschnitts wie einem über dem Vibrationsteil gelegten Blatt angeordnet sind.

## Revendications

1. Moteur actionné par ondes vibratoires, comportant :
un élément vibratoire en forme de boucle constituée de parties droites et de parties courbes qui s'étendent depuis lesdites parties droites, ledit élément vibratoire générant une onde vibratoire progressive circulant dans l'élément vibratoire en réponse à au moins des première et seconde ondes stationnaires qui sont produites lorsqu'un signal électrique lui est appliqué,
dans lequel le rapport de la somme de l'énergie de déformation à la somme des amplitudes des vibrations, élevée au carré, dans ledit élément vibratoire associé à ladite première onde stationnaire est égal au rapport de la somme de l'énergie de déformation à la somme des amplitudes de vibrations, élevée au carré, dans ledit élément vibratoire associé à la seconde onde stationnaire.

2. Moteur actionné par ondes vibratoires selon la revendication 1, dans lequel ledit élément vibratoire est constitué d'une paire de parties droites, d'une paire de parties courbes s'étendant depuis des extrémités respectives de ladite paire de parties droites, d'une largeur prédéterminée et d'une épaisseur prédéterminée.

3. Moteur actionné par ondes vibratoires selon la revendication 1 ou 2, dans lequel le rapport des longueurs des parties droites et courbes est ajusté d'une manière telle que lesdits rapports des sommes deviennent sensiblement égaux.

4. Moteur actionné par ondes vibratoires selon la revendication 2, dans lequel la longueur de chaque partie droite est de 10,9 mm, le rayon de chaque partie courbe est de 8,5 mm, le diamètre extérieur est de 12,5 mm, la largeur est de 4 mm et l'épaisseur est de 4 mm.

5. Moteur actionné par ondes vibratoires selon la revendication 1, 2, 3 ou 4, dans lequel ledit élément vibratoire présente une surface de contact qui est en contact avec ledit élément de contact.

6. Moteur actionné par ondes vibratoires selon la revendication 5, dans lequel la surface de contact dudit élément vibratoire présente plusieurs gorges.

7. Moteur actionné par ondes vibratoires selon la revendication 6, dans lequel la profondeur desdites gorges est de 1,5 mm.

8. Moteur actionné par ondes vibratoires, comportant :
(a) un élément vibratoire en forme de boucle qui comporte une paire de parties droites ayant chacune une longueur prédéterminée, et une paire de parties courbes ayant une longueur prédéterminée et s'étendant depuis des extrémités respectives desdites parties droites ; et
(b) une paire d'éléments de conversion d'énergie électro-mécanique en contact avec ledit élément vibratoire pour générer des première et seconde ondes stationnaires dans ledit élément vibratoire en réponse à un signal électrique appliqué, les longueurs des parties droites et courbes dudit élément vibratoire étant ajustées de manière que le rapport de la somme de l'énergie de déformation à la somme de l'amplitude de vibrations, élevée au carré, dans ledit élément vibratoire, associée à ladite première onde stationnaire, soit égal au rapport de la somme de l'énergie de déformation à la somme de l'amplitude de vibrations, élevée au carré, dans ledit élément vibratoire, associée à la seconde onde stationnaire.

9. Moteur actionné par ondes vibratoires selon la revendication 8, dans lequel la longueur de chaque partie droite est de 10,9 mm, le rayon de chaque partie courbe est de 8,5 mm, le diamètre extérieur est de 12,5 mm, la largeur est de 4 mm et l'épaisseur est de 4 mm pour ledit élément vibratoire.

10. Moteur actionné par ondes vibratoires selon la revendication 8 ou 9, dans lequel ledit élément vibratoire présente une surface en contact qui est en contact avec ledit élément de contact.

11. Moteur actionné par ondes vibratoires selon la revendication 10, dans lequel la surface de contact dudit élément vibratoire présente plusieurs gorges.

12. Moteur actionné par ondes vibratoires selon la revendication 11, dans lequel la profondeur desdites gorges est de 1,5 mm.

13. Moteur actionné par ondes vibratoires, comportant :
(a) un élément vibratoire en forme de boucle qui comporte une paire de parties droites ayant chacune une longueur prédéterminée, et une paire de parties courbes ayant une longueur prédéterminée et s'étendant depuis lesdites parties droites ; et
(b) une paire d'éléments de conversion d'énergie électro-mécanique situés sur ledit élément vibratoire avec une différence dans des positions déphasées et destinés à générer des première et seconde ondes stationnaires dans ledit élément vibratoire en réponse à des signaux électriques qui leur sont appliqués avec une différence de phase électrique entre eux, les longueurs des parties droites et courbes dudit élément vibratoire étant ajustées de façon que le rapport de la somme d'énergie de déformation à la somme d'amplitudes de vibrations, élevée au carré, dans ledit élément vibratoire, associée à ladite première onde stationnaire soit égal au rapport de la somme de l'énergie de déformation à la somme de l'amplitude des vibrations, élevée au carré, dans ledit élément vibratoire, associée à ladite seconde onde stationnaire.

14. Imprimante actionnée par ondes vibratoires, comportant :
(a) un élément de contact ;
(b) un corps mobile de forme elliptique qui est en contact mobile avec ledit élément de contact ;
(c) une tête d'impression engagée avec ledit corps mobile ; et
(d) une paire d'éléments de conversion d'énergie électro-mécanique en contact avec ledit élément mobile pour générer des première et seconde ondes stationnaires dans ledit élément mobile en réponse à un signal électrique appliqué, les longueurs des parties droites et courbes dudit élément mobile étant ajustées de façon que le rapport de la somme de l'énergie de déformation à la somme de l'amplitude des vibrations, élevée au carré, dans ledit élément mobile, associée à ladite première onde stationnaire soit rendu égal au rapport de la somme de l'énergie de déformation à la somme de l'amplitude des vibrations, élevée au carré, dans ledit élément mobile, associée à ladite seconde onde stationnaire.

15. Imprimante actionnée par ondes vibratoires selon la revendication 14, dans laquelle ladite imprimante est une imprimante du type à jets produits par bulles.

16. Dispositif vibratoire pour un moteur actionné par ondes vibratoires, comportant :
(a) un élément vibratoire en contact avec un élément de contact et constitué d'une paire de parties droites ayant chacune une longueur prédéterminée, et d'une paire de parties courbes ayant une longueur prédéterminée et s'étendant depuis lesdites parties droites ;
(b) une paire d'éléments de conversion d'énergie électro-mécanique en contact avec ledit élément vibratoire pour générer des première et seconde ondes stationnaires dans ledit élément vibratoire en réponse à un signal électrique appliqué, les longueurs des parties droites et courbes dudit élément vibratoire étant ajustées de façon que le rapport de la somme de l'énergie de déformation à la somme de l'amplitude des vibrations, élevée au carré, associé à ladite première onde stationnaire, soit égal au rapport de la somme de l'énergie de déformation à la somme de l'amplitude des vibrations, élevée au carré, dans ledit élément vibrant, associé à ladite seconde onde stationnaire.

17. Utilisation d'un moteur à ondes vibratoires selon l'une quelconque des revendications 1 à 13, dans laquelle les éléments vibratoires du moteur sont disposés fixement dans une position prédéterminée pour transporter un élément de transport tel qu'une feuille placée sur l'élément vibratoire.
